# EUROPEAN PATENT APPLICATION

(11) **EP 4 672 188 A1**
(43) Date of publication of application: **31.12.2025**
(21) Application number: 25185901.3
(22) Date of filing: 27.06.2025
(51) Int. Cl.: G07F 11/62, G07F 17/00, G07F 17/12, G06Q 20/18, G07F 7/06, G07F 9/00

(54) **MODULAR GAS CYLINDER DISPENSING SYSTEM**

(30) Priority: 28.06.2024 PT 2024119562
(62) Divisional of application: 25190096.5
(71) Applicant: Gavedra, S.A., 2560-232 Torres Vedras (PT)
(72) Inventor: NUNES, Frederico, Torres Vedras (PT)
(74) Representative: do Nascimento Gomes, Rui

(57) **Abstract**

The present disclosure falls within the field of gas supply by cylinder and, in particular, refers to a modular system (100) for dispensing gas cylinders and/or gas cylinder adaptor kits, the system (100) being automated and guaranteeing the modularity of its elements. The system (100) comprises a control module (10) and at least one dispenser module (20), the control module (10) and each dispenser module (20) being physically separable, in such a way that the control module (10) electronically and independently addresses doors (22) comprised in a dispenser module (20), so that each door (22) can be opened upon transmission and subsequent receipt of an electronic instruction by the control module (10), independently of the other doors (22).

## Description

### FIELD OF THE INVENTION

The present disclosure falls within the field of gas supply by cylinder and, in particular, refers to a modular system for dispensing gas cylinders and/or gas cylinder adaptor kits, the system being automated and guaranteeing the modularity of its elements.

### PRIOR ART

Automated systems for dispensing products stored in individual compartments are known in the art, typically in applications such as vending machines, but also suitable for dispensing larger products such as gas cylinders.

The systems known in the art use electronic control mechanisms to allow or prevent access to individual compartments based on user authentication or a control signal. However, the majority of these systems are designed as a monolithic, fixed unit, with inbuilt controllers and internal communication architecture limited to the single physical structure of the equipment.

Therefore, they do not guarantee a modular construction that can be adapted to the solution to be installed. This modularity guarantees scalability, which is essential in gas cylinder dispenser solutions, which are particularly sensitive to location and corresponding local demand and can even involve areas with seasonal consumption.

### SUMMARY OF THE INVENTION

The present disclosure includes a modular system for dispensing gas cylinders and/or gas cylinder adaptor kits comprising a control module and at least one dispenser module, the control module and each dispenser module being physically separable,
the dispenser module comprising i) a plurality of receptacles, each receptacle being suitable for fitting a gas cylinder or an adaptor kit for a gas cylinder, and ii) a plurality of doors, each door being associated with a receptacle and being electronically controllable by the control module, the control module being configured to operate as a master while each controllable door is configured to operate as a slave of the control module and has a unique address, and wherein the control module is further configured to electronically and independently address each door with a unique address, so that each door can be opened upon transmission and subsequent receipt of an electronic instruction from the control module,
and each controllable door comprises a locking part, which prevents the removal of a gas cylinder and/or gas cylinder adaptor kit placed in the receptacle when the door is closed, and a controllable lock, the aforementioned electronic instruction received opening the door by opening the lock and the locking part, independently of the other doors.

Communication between the control module and each door and/or lock of the dispenser module can be wired, wireless or wired and wireless.

The control module can additionally comprise a communications controller for communications with the outside of the modular system, the communications controller being configured to receive a message from an external device, such as a smartphone, and activate the opening of a door and corresponding lock.

The control module can additionally comprise a local interface for interfacing with a user, the local interface being configured to receive an instruction for opening a door and corresponding lock, and activate the opening of a door and corresponding lock.

The local interface can comprise a keyboard, a screen and/or a touchscreen.

The modular system can comprise a plurality of dispenser modules, each dispenser module, its doors and corresponding locks associated with receptacles communicating directly with a single control module.

Each dispenser module can be connected to the control module via a common communication interface.

The control module can be configured to address two or more controllable doors associated with two or more physically separable dispenser modules.

Each dispenser module can comprise a plurality of receptacles arranged along two rows, one row being arranged over the other row, and n columns, where n is greater than 1, optionally n being equal to 2, 3, 4, 5 columns.

The control module can be configured to electronically scan or poll the controllable doors (22) to detect the operating status of each door and accordingly issue electronic instructions in a selective manner.

The operating state of each controllable door includes one or more of the following conditions:
a) door closed and locked;
b) door closed and unlocked;
c) door open;
d) presence or absence of a gas cylinder and/or gas cylinder adaptor kit;
e) failure of the locking mechanism.

The control module can additionally be configured to issue more than one electronic instruction at the same time, simultaneously addressing two or more slave doors and thus simultaneously unlocking two or more corresponding receptacles.

The control module can be additionally configured to apply one or more pre-configured logical restrictions to limit the combination of doors that can be simultaneously unlocked.

The control module can be additionally configured to automatically recognise the presence and addresses of the controllable doors of each dispenser module when a dispenser module is connected to the control module.

The present disclosure also includes a method for controlling the modular system for dispensing gas cylinders and/or gas cylinder adaptor kits of the present disclosure, the method comprising the following steps:
a) associate each electronically controllable door with a unique address within a communication architecture between master and slaves;
b) carry out, using the control module, a cyclical scan of the addresses of the slave doors in order to ascertain their operating status;
c) identify at least one door to be unlocked;
d) the control module issues an electronic unlocking instruction addressed to the unique address of the identified door or to a set of door addresses;
e) receive an electronic unlocking instruction from each addressed door; and
f) in response to this instruction, the corresponding electronic lock and locking part (23) are activated, allowing the opening of each door addressed.

### DESCRIPTION OF FIGURES

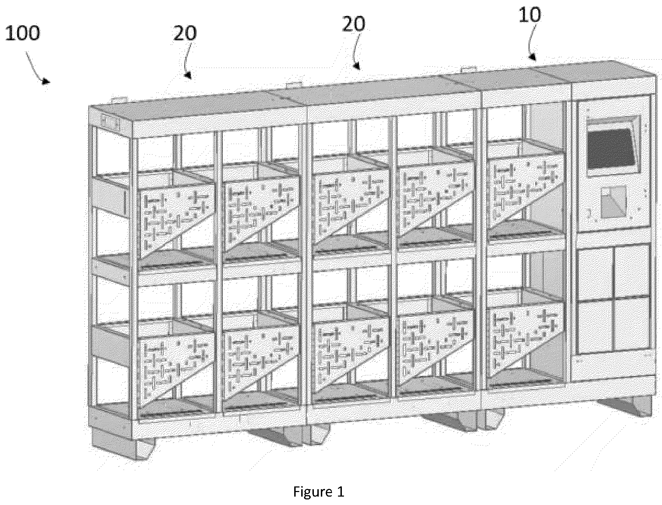

Figure 1 - representation of a modular system (100) according to the present disclosure, comprising a control module (10) and two dispenser modules (20).

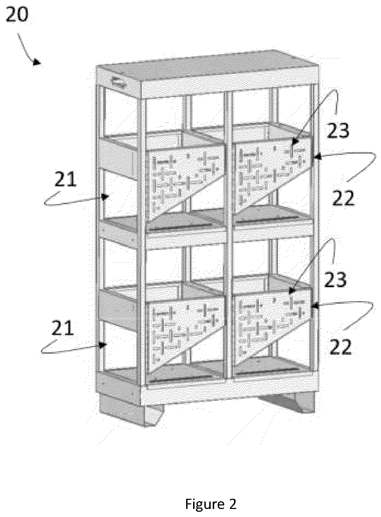

Figure 2 - representation of the dispenser module in figure 1, comprising a receptacle (21) and a respective controllable door (22) with a locking part (23), featuring two rows and two columns of receptacles (21) and respective controllable doors (22).

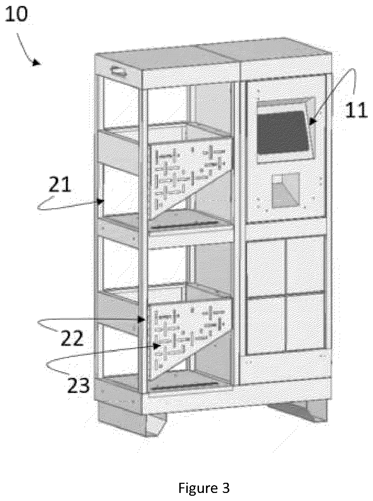

Figure 3 - representation of the control module (10) in figure 1, with a local interface (11) to which a receptacle (21) and an electronically controllable door (22) are associated.

### DETAILED DESCRIPTION

The present disclosure includes a modular system (100) for dispensing gas cylinders and/or gas cylinder adaptor kits.

As mentioned, the modular system (100) of the present disclosure provides for scalability in terms of the number of products that it makes available, by presenting a modular structure with a control module (10) and at least one dispenser module (20), the control module (10) and each dispenser module (20) being physically separable. Therefore, each control module (10) can be associated with at least one dispenser module (20). The ability to build systems according to the present disclosure is thus simplified, given that with only two constructive elements, namely a control module (10) and a dispenser module (20), it is possible to build dispensing systems of any size by varying the number of dispenser modules associated with the same control module (10).

Each dispenser module (20) comprises i) a plurality of receptacles (21), each receptacle (21) being suitable for fitting a gas cylinder or an adaptor kit for a gas cylinder, and ii) a plurality of doors, each door being associated with a receptacle (21) and being electronically controllable by the control module (10).

The control module (10) can also comprise one or more receptacles (21), with their respective electronically controllable doors, operating in the same way as the receptacles (21) and doors comprised in the dispenser module (20) as described in the present disclosure.

The control module (10) is configured to operate as a master while each controllable door (22) is configured to operate as a slave of the control module (10) and has a unique address, wherein the control module (10) is further configured to electronically and independently address each door with a unique address, so that each door can be opened upon transmission and subsequent receipt of an electronic instruction from the control module (10).

Each door can thus be electronically addressed and therefore controlled by the control module (10).

Each controllable door (22) comprises a locking part (23), which prevents the removal of a gas cylinder and/or gas cylinder adaptor kit placed in the receptacle (21) when the door is closed, and a controllable lock, the aforementioned electronic instruction received opening the door by opening the lock and the locking part (23), independently of the other doors.

Receipt of an electronic instruction addressed to a controllable door (22) causes the exclusive opening of said door by activating the respective lock and moving the locking part (23) associated therewith, without any mechanical, electrical or logical effect being produced on the other doors of the system. This independence among doors guarantees a modular, secure and scalable operation, allowing multiple users to simultaneously access different receptacles (21) without mutual interference.

Communication between the control module (10) and each door and/or lock of the dispenser module (20) is wired, wireless or wired and wireless. In the case of wired communication, this can be carried out via a serial bus-based communications protocol, such as RS-485, CAN or I2C, or Ethernet. Communication can be based on more than one of these wired communication protocols. In the case of wireless communication, this can be carried out using a wireless local area network communications protocol such as Wi-Fi (IEEE 802.11), Zigbee, Bluetooth Low Energy (BLE), LoRa, or a proprietary protocol in the radio frequency range. Communication can be based on more than one of these wireless communication protocols. In the case of wired and wireless communication, this is a hybrid solution, in which one or more of the aforementioned wired communication protocols and wireless communication protocols are used. This flexibility enables the system to be adapted to different scenarios - from fixed industrial installations to systems distributed in environments without wiring infrastructure - while maintaining communication integrity and individual control of each door.

The control module (10), comprising a communications controller for communications with the outside of the modular system (100), contains a controller that is functionally integrated with the control module (10), enabling it to receive messages, for example messages with electronic instructions, incoming from a device external to the system and, in response, to issue an electronic instruction that activates the opening of a specific door and the respective electronic lock. Communication through said communications controller can be carried out via wireless technologies such as Wi-Fi, Bluetooth or mobile networks, or via a wired connection, and integrates authentication and registration mechanisms to guarantee the security of the operation. The communications controller can thus be configured to receive a message from an external device, such as a smartphone, guaranteeing a simplified means of interaction for a user.

The control module (10), comprising a local interface (11) for interfacing with a user, enables the user to directly interact with the modular system (100) by entering, for example, an identifier, an access code and/or a door selection. The local interface (11) is functionally integrated into the control module (10), enabling it to receive an opening instruction corresponding to a specific door and, in response, to send an electronic unlocking instruction for that door and the respective electronic lock. The interface can include elements such as a touch screen, a physical keyboard, a card reader, biometric sensors and/or physical buttons associated with individual doors.

The corresponding interaction process may involve the following steps:
- The user interacts with the local interface (11) (e.g. enters code, card or chooses receptacle number);
- The control module (10) validates the instruction (by local authentication or database query);
- If valid, the control module (10) generates an electronic instruction to the addressed door of the respective dispenser module (20);
- The corresponding door unlocks the lock and the locking portion (23), allowing access to a user.

The system can comprise a plurality of dispenser modules, each dispenser module (20), its doors and corresponding locks associated with receptacles (21) communicating directly with a single control module (10). The single control module (10) is thus a central control module (10), which manages and coordinates the operation of all the doors in the system. This direct communication enables the control module (10) to individually address each door and respective lock, regardless of which dispenser module (20) they belong to, ensuring a distributed, modular and scalable operation. The dispenser modules are physically independent of one another and can be installed in different locations, maintaining connectivity with the control module (10) via wired or wireless connection, or via a combination of the two.

Each of said dispenser modules is functionally connected to a single central control module (10), which is configured to manage the whole operation of the system, including the receipt of external instructions, addressing the doors individually and issuing opening or closing commands to the electronic locks of each door.

Communication between the control module (10) and the multiple dispenser modules can be carried out via a common communication interface, which forms a shared transmission infrastructure - physical, logical or both - that establishes a single data communication channel (bidirectional) between the control module (10) and the various dispenser modules.

Each dispenser module (20) can be connected to the control module (10) via a common communication interface. In the case of wired communication between control module (10) and doors and in the case of a system with more than one dispenser module (20), the communication means of a first dispenser module (20) connected directly to the control module (10) can be used by a second dispenser module (20), connected to the first dispensing module (20). This structure can be replicated for n dispenser modules, where each n+1 dispenser module (20) is connected to an n module, thus increasing modularity and sharing a common communication interface.

Additionally, each dispenser module (20) can thus be identified by a unique logical address assigned within the common interface, and each door within a module can also be identified by a sub-address or internal identifier. The control module (10) can thus be configured to individually address any door in the system, regardless of which physical module it belongs to, using directed commands of the type "[module X; door Y]".

Adopting a common communication interface makes it possible to significantly reduce installation complexity and cost, given that no dedicated channels are required for each dispenser module (20), while maintaining a scalable architecture in which new modules can be added without a structural reconfiguration of the system.

The control module (10) can also be configured to address two or more controllable doors (22) associated with two or more physically separable dispenser modules, thus being configured to electronically address several doors even when they are distributed among different, physically distinct dispenser modules. For this purpose, it can operate with hierarchical addressing logics, wherein each dispenser module (20) has its own identifier (module ID), and each door of that module has an individual sub-address (e.g. module 1, door 3).

Therefore, the control module (10) can, from a central point, issue instructions to any door in the system, regardless of the dispenser module (20) to which it belongs or the physical location of the module.

Each dispenser module (20) can comprise a plurality of receptacles (21) arranged along two rows, one row being arranged over the other row, and n columns, where n is greater than 1. The receptacles (21) are physically organised in a two-dimensional structure, which can comprise
- two stacked horizontal rows (top row and bottom row); and
- n vertical columns (at least two columns per module).

The arrangement of the receptacles (21) in two stacked rows makes it possible to efficiently use the front volume of the dispenser module (20) and improves accessibility, given that the user can easily access both the lower and upper rows with simple movements.

The multiple column configuration (n > 1) ensures that each dispenser module (20) can house a significant number of receptacles (21) while maintaining a regular and scalable structure, ideal for manufacturing, maintenance and alignment with automated control systems.

In a typical layout example, a dispenser module (20) may comprise two rows (top and bottom) and two columns, totalling four sequentially numbered receptacles (21), for example: Top row: R1.1, R1.2 / Bottom row: R2.1, R2.2.

Being configured to electronically scan or poll the controllable doors (22) to detect the operating status of each door and accordingly issue electronic instructions in a selective manner, the control module (10) keeps an up-to-date map of the system status, making it possible for decisions to be taken and selective up-to-date electronic instructions to be issued, aimed only at the doors that require action, such as:
Ordering the opening of a specific door in response to an external or local command;
Keeping doors in a locked status while unauthorised;
Issuing alerts in the event of failures or abnormal states.

This functionality ensures safe, efficient and coordinated operation of the modular system (100), guaranteeing that doors are only handled when authorised and preventing redundant or conflicting commands.

Status information can include:
- Door status (open, closed);
- Lock status (locked, unlocked);
- Presence or absence of the item in its receptacle (21) (e.g. gas cylinder);
- Detection of any operational failures or errors (e.g. lock failure, attempted unauthorised access).

The control module (10) can additionally be configured to issue more than one electronic instruction at the same time, simultaneously addressing two or more slave doors and thus simultaneously unlocking two or more corresponding receptacles (21). This configuration makes it possible for two or more receptacles (21) to be unlocked simultaneously, increasing the efficiency and speed of the modular dispensing system (100). Simultaneous transmission can be achieved via a communication protocol that supports multiple addressing and guarantees independent and secure execution for each controllable door (22). A user, for example via the local interface (11), can thus select the dispensing of more than one item, for example a gas cylinder and a gas cylinder adaptor kit, or more than one gas cylinder, and have several products dispensed at once.

The control module (10) can be further configured to apply one or more pre-configured logical restrictions to limit the combination of doors that can be unlocked simultaneously. These restrictions can include maximum limits for open doors, compatibility rules between receptacles (21), geographical and time restrictions and/or conditional authorisation requirements. In the event of non-compliance with one or more rules, the control module (10) can block the execution of the electronic instruction in question, block the dispenser module (20) in question or even block all the dispenser modules in the system, preventing any further dispensing action from being carried out. It can cumulatively or alternatively issue warnings and suggest alternatives, ensuring the safe and controlled operation of the modular system (100).

The control module (10) can also be configured to automatically recognise the presence and addresses of the controllable doors (22) of each dispenser module (20) when a dispenser module (20) is connected to the control module (10). Automatic recognition thus comprises the initial scanning of a newly connected dispenser module (20), obtaining the list of doors and their unique addresses and updating the internal database of the control module (10), allowing immediate individualised control of each door without the need for manual configuration, favouring the scalability and flexibility of the system.

The method of the present disclosure may comprise carrying out steps corresponding to each of the previously described configurations relating to the system, the control module (10) or the dispenser module (20).

The dispenser modules, which support the gas cylinders and/or gas cylinder adaptor kits, are made from a square tubular profile with an embossed paint finish. The other structural elements are made from sheet metal:
- Stainless steel with embossed paint finish:
   ∘ Ceilings, side profiles, gas cylinder compartment doors and adaptor kit compartments;
   ∘ Structure of the control module, its door and rear panel;
   ∘ Covers for applying LEDS;
   ∘ Internal structure of the adaptor kit compartments;
- Stainless steel
   ∘ Gas cylinder support shelves;
- Stainless steel with embossed paint finish
   ∘ Structure support legs;
- Galvanised sheet metal
   ∘ Internal dividers for the control module and plates for electronics.

Each gas cylinder support base is made of polyethylene (PE).

Although the present disclosure is described primarily in terms of systems, modules and methods, a person skilled in the art understands that it also refers to various devices or apparatus, which may include one or more computing devices, with one or more means of communication, installed locally or remotely.

For example, the method of the present disclosure can be implemented by the system of the present disclosure, including electronic or computational devices, such as controllers or microcontrollers comprising processors.

The system, control module (10), dispenser module (20) and/or each door of the present disclosure can comprise one or more electronic or computational devices, with computational means installed locally or remotely, as well as electronic communication capabilities.

The system can include components to perform at least some of the features and functionalities exemplifying the methods described, whether through hardware components (such as memory and/or processor), software or any combination thereof.

An article for use with the system, such as a pre-recorded storage device or other similar computer-readable medium including programme instructions recorded thereon, or a computer data signal carrying readable programme instructions, can instruct a computing device to facilitate the implementation of the methods described herein. It is understood that such apparatus, manufactured articles or computer data signals also come under the scope of the present disclosure.

As will be clear to one skilled in the art, the present invention should not be limited to the embodiments described herein, and a number of changes are possible which remain within the scope of the present invention.

The embodiments presently described are combinable, in their different possible forms, the repetition of all such combinations being herein avoided.

## Claims

1. Modular system (100) for dispensing gas cylinders and/or gas cylinder adaptor kits comprising a control module (10) and at least one dispenser module (20), the control module (10) and each dispenser module (20) being physically separable,
the dispenser module (20) comprising i) a plurality of receptacles (21), each receptacle being suitable for fitting a gas cylinder or an adaptor kit for a gas cylinder, and ii) a plurality of doors, each door being associated with a receptacle (21) and being electronically controllable by the control module (10),
the control module (10) being configured to operate as a master while each controllable door (22) is configured to operate as a slave of the control module (10) and has a unique address, and wherein the control module (10) is further configured to electronically and independently address each door with a unique address, so that each door can be opened upon transmission and subsequent receipt of an electronic instruction from the control module (10),
and each controllable door (22) comprises a locking part (23), which prevents the removal of a gas cylinder and/or gas cylinder adaptor kit placed in the receptacle (21) when the door is closed, and a controllable lock, the aforementioned electronic instruction received opening the door by opening the lock and the locking part (23), independently of the other doors.

2. Modular system (100) according to the preceding claim, wherein communication between the control module (10) and each door and/or lock of the dispenser module (20) is wired, wireless or wired and wireless.

3. Modular system (100) according to either of the preceding claims, wherein the control module (10) additionally comprises a communications controller for communications with the outside of the modular system (100), the communications controller being configured to receive a message from an external device, such as a smartphone, and activate the opening of a door and corresponding lock.

4. Modular system (100) according to any of the preceding claims, wherein the control module (10) additionally comprises a local interface (11) for interfacing with a user, the local interface (11) being configured to receive an instruction for opening a door and corresponding lock, and activate the opening of a door and corresponding lock.

5. Modular system (100) according to the preceding claim, wherein the local interface (11) comprises a keyboard, a screen and/or a touchscreen.

6. Modular system (100) according to any of the preceding claims, which comprises a plurality of dispenser modules, each dispenser module (20), its doors and corresponding locks associated with receptacles (21) communicating directly with a single control module.

7. Modular system (100) according to any of the preceding claims, wherein each dispenser module (20) is connected to the control module (10) via a common communication interface.

8. Modular system (100) according to any of the preceding claims, wherein the control module (10) is configured to address two or more controllable doors (22) associated with two or more physically separable dispenser modules.

9. Modular system (100) according to any of the preceding claims, wherein each dispenser module (20) comprises a plurality of receptacles (21) arranged along two rows, one row being arranged over the other row, and n columns, where n is greater than 1, optionally n being equal to 2, 3, 4, 5 columns.

10. Modular system (100) according to any of the preceding claims, wherein the control module (10) is configured to electronically scan or poll the controllable doors (22) to detect the operating status of each door and accordingly issue electronic instructions in a selective manner.

11. Modular system (100) according to the preceding claim, wherein the operating status of each controllable door (22) includes one or more of the following conditions:
a) door closed and locked;
b) door closed and unlocked;
c) door open;
d) presence or absence of a gas cylinder and/or gas cylinder adaptor kit;
e) failure of the locking mechanism.

12. Modular system (100) according to any of the preceding claims, wherein the control module (10) is additionally configured to issue more than one electronic instruction at the same time, simultaneously addressing two or more slave doors and thus simultaneously unlocking two or more corresponding receptacles (21).

13. Modular system (100) according to the preceding claim, wherein the control module (10) is additionally configured to apply one or more pre-configured logical restrictions to limit the combination of doors that can be simultaneously unlocked.

14. Modular system (100) according to any of the preceding claims, wherein the control module (10) is additionally configured to automatically recognise the presence and addresses of the controllable doors (22) of each dispenser module (20) when a dispenser module (20) is connected to the control module (10).

15. Method for controlling the modular system (100) for dispensing gas cylinders and/or gas cylinder adaptor kits of any one of the preceding claims, the method comprising the following steps:
a) associate each electronically controllable door with a unique address within a communication architecture between master and slaves;
b) carry out, using the control module (10), a cyclical scan of the addresses of the slave doors in order to ascertain their operating status;
c) identify at least one door to be unlocked;
d) the control module (10) issues an electronic unlocking instruction addressed to the unique address of the identified door or to a set of door addresses;
e) receive an electronic unlocking instruction from each addressed door; and
f) in response to this instruction, the corresponding electronic lock and locking part (23) are activated, allowing the opening of each door addressed.
